(19) Europäisches Patentamt / European Patent Office / Office européen des brevets

(11) **EP 4 566 905 A2**

(12) **EUROPEAN PATENT APPLICATION**

(43) Date of publication:
**11.06.2025 Bulletin 2025/24**

(21) Application number: **24215497.9**

(22) Date of filing: **26.11.2024**

(51) International Patent Classification (IPC):
**B60W 40/06** (2012.01)   **B60W 50/00** (2006.01)

(52) Cooperative Patent Classification (CPC):
**B60W 40/06;** B60W 2050/0083; B60W 2510/0638;
B60W 2510/0657; B60W 2520/10; B60W 2520/105;
B60W 2520/28; B60W 2520/30; B60W 2552/15

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.12.2023 US 202363605798 P**
**30.09.2024 US 202418901558**

(71) Applicant: **The Goodyear Tire & Rubber Company Akron, OH 44316 (US)**

(72) Inventors:
• **SINGH, Kanwar Bharat**
  **Copley, Ohio, 44321 (US)**
• **BALAGA, Sanjay Raghav**
  **L-2716 Luxembourg (LU)**

(74) Representative: **Kutsch, Bernd**
**Goodyear S.A.**
**Patent Department**
**Avenue Gordon Smith**
**7750 Colmar-Berg (LU)**

(54) **SYSTEM AND METHOD FOR DETECTING A ROAD SURFACE CONDITION**

(57)    Disclosed is a method and a system for predicting a road surface condition based at least in part on tire resistive forces and vehicle data (218) obtained from the controller area network (CAN) bus (115) of a vehicle (103). In response to determining that the vehicle is in a steady state, tractive forces can be estimated using the vehicle data (218). The tractive forces and the vehicle speed can be inputted into a trained surface condition detection model (230). The surface condition detection model (230) is trained to predict a probability that a surface is wet or dry based at least in part on the tractive forces. The probability that a surface is wet or dry can be provided to other vehicle systems (206) for adjustment of vehicle operations.

FIG. 2B

200b

EP 4 566 905 A2

**Description**

BACKGROUND

Road surface conditions can affect how a vehicle travels across the road surface. For example, road surface conditions, such as, rain, snow, gravel, or ice, can affect a vehicle's traction, stability, braking distance, suspension, efficiency, and other operational features of a vehicle. Understanding the road surface conditions can allow a vehicle control system(s) to adjust accordingly to compensate for the particular type of road surface condition such that the vehicle operates safely, stable, and efficiently.

SUMMARY OF THE INVENTION

The invention relates to a method in accordance with claim 1, to a system in accordance with claim 7 and to a non-transitory, computer-readable medium in accordance with claim 12.
Dependent claims refer to preferred embodiments of the invention.

BRIEF DESCRIPTION OF THE DRAWINGS

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.

FIG. 1A illustrates an example perspective view of a vehicle supported by tires according to various embodiments.
FIG. 1B illustrates an example diagram of a top view of the vehicle of FIG. 1A illustrating vehicle components according to various embodiments of the present disclosure.
FIGS. 2A and 2B are example drawings of network environments according to various embodiments of the present disclosure.
FIG. 3 is a pictorial diagram illustrating the known longitudinal vehicle dynamics associated with a vehicle.
FIG. 4 is an example graphical representation illustrating the relationship between tire tractive forces (under steady state cruising conditions) versus vehicle speed on dry and wet surfaces according to various embodiments of the present disclosure.
FIGS. 5A, 5B, and 5C are example graphical representation illustrating the relationship between tire tractive forces (under steady state cruising conditions) versus vehicle speed on dry and wet surfaces for different tire type constructions according to various embodiments of the present disclosure.
FIG. 6 illustrates example graphical representations illustrating the relationship between tire tractive forces (under steady state cruising conditions) versus vehicle speed on dry and wet surfaces for both new tires and fully worn tires according to various embodiments of the present disclosure.
FIG. 7 is an example graphical representation corresponding to the training of the surface condition detection model for classifying road conditions according to various embodiments of the present disclosure.
FIG. 8 is an example schematic diagram illustrating some of the functionality of an application executed in a computing environment in the network environments of FIG. 2A and 2B according to various embodiments of the present disclosure.
FIGS. 9A, 9B, and 9C are example graphical representations associated with the real-time testing of a surface condition detection model trained to predict wet or dry road conditions., 9A illustrates graphical representations associated with various data parameters that can be applied as inputs to the surface condition detection model. FIG. 9B illustrates a graphical representation associated with the prediction of the surface condition detection model versus the ground truth. FIG. 9C illustrates a graphical representation of the model confidence for the surface condition detection model.
FIG. 10 is a flowchart illustrating one example of functionality implemented as portions of an application executed in a computing environment in the network environments of FIG. 2A and 2B according to various embodiments of the present disclosure.

DETAILED DESCRIPTION OF PREFERRED EMBODIMENTS

Disclosed are various approaches for predicting a road surface condition based at least in part on tire resistive forces. In various examples, road surface conditions can be predicted based at least in part on an estimation of tire resistive forces using vehicle data obtained from a controller area network (CAN) bus of a vehicle. For example, vehicle data can include an engine torque, an engine revolutions per minute (RPM), a vehicle speed, a wheel speed, a vehicle acceleration, and/or other types of vehicle-based data that can be obtained from the CAN bus data of the vehicle. Upon determining that the vehicle is traveling in a steady state, tractive forces can be estimated using the CAN bus data. The tractive forces along with the vehicle speed can be applied as inputs to a trained road condition detection model. The output of the road condition detection model can include a probability of whether the road condition is wet or dry. For example, tire resistive forces are higher when the road is wet. Therefore, the probability of whether the road condition is wet or dry can be based at least in part on the tire resistive forces that are estimated in real-time. The probability and/or a prediction of whether the road condition is wet or dry can be used by other vehicle control systems to adjust appropriately based on the type of road condition.

In the following discussion, a general description of the system and its components is provided, followed by a discussion of the operation of the same. Although the following discussion provides illustrative examples of the operation of various components of the present disclosure, the use of the following illustrative examples does not exclude other implementations that are consistent with the principals disclosed by the following illustrative examples.

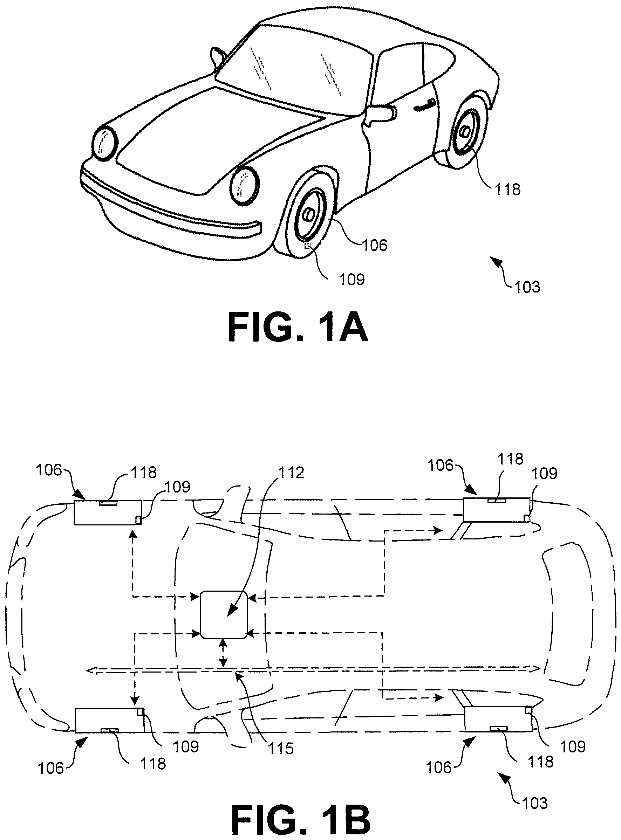

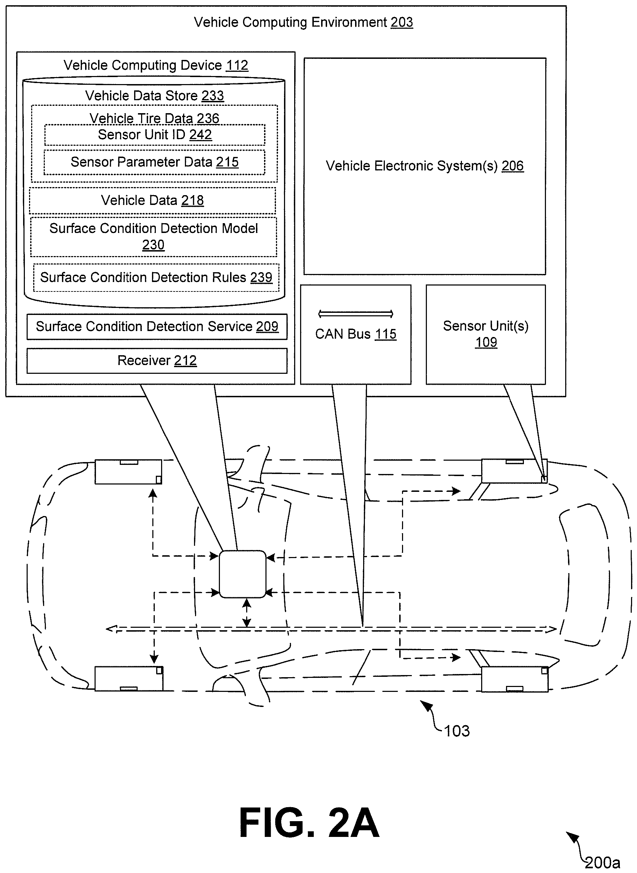

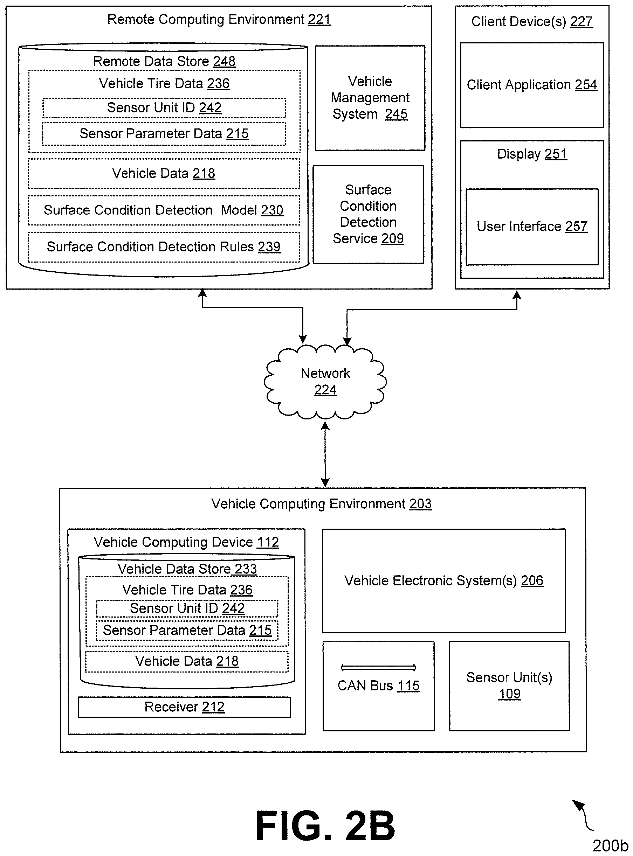

Turning now to FIGS. 1A and 1B, shown are example views of vehicles 103 according to various embodiments. FIG. 1A illustrates an example perspective view of a vehicle 103 supported by a plurality of tires 106 according to various embodiments. FIG. 1B illustrates an example diagram of a top view of a vehicle 103 illustrating vehicle components including tires 106, sensor units 109 attached to the tires 106, a vehicle computing device 112, and a CAN bus 115. The vehicle computing system 112 and the CAN bus 115 are discussed in more detail with regard to FIGS. 2A and 2B.

The tires 106 are of conventional construction, and each tire is mounted on a respective wheel as known to those skilled in the art. Each tire 106 includes a pair of sidewalls that extend to a circumferential tread. An innerliner is disposed on the inner surface of the tire 106, and when the tire is mounted on the wheel 118, an internal cavity is formed, which is filled with a pressurized fluid, such as air.

In various examples, the sensor unit 109 is mounted on or otherwise attached to each tire 106 for the purpose of detecting certain real-time parameters of the tire 106, such as tire pressure and tire temperature. In various examples, the sensor unit 109 can comprise at least one of a pressure sensor to sense the inflation pressure within a cavity, a temperature sensor to measure a temperature of the tire, an accelerometer for measuring acceleration of a wheel 118 on which the tire 106 is mounted, a revolution counter to measure a revolution time of the wheel 118, and/or other types of sensors. The sensor unit 109 may be part of a commercially-available tire pressure monitoring system (TPMS) module or sensing unit.

In various examples, the sensor unit 109 comprises a processor and memory to store vehicle tire information for each specific tire 106. For example, the tire vehicle tire information may include a tire identifier (ID), manufacturing information for the tire 106 (e.g., model number, manufacturer name, etc.), size information (e.g., rim size, width, and outer diameter), manufacturing location, manufacturing date, a treadcap code that includes or correlates to a compound identification, a mold code that includes or correlates to a tread structure identification, and/or other information. The vehicle tire information may also include a service history or other information to identify specific features and parameters of each tire 106. Alternativity or additionally, the vehicle tire information may be included in another sensor unit 109, or in a separate vehicle storage medium, such as a tire ID tag, which preferably is in electronic communication with the sensor unit 109.

The sensor unit 109 further includes an antenna (not shown) for wirelessly transmitting measured parameters and tire information data to a remote processor for analysis, such as a processor integrated into the vehicle computing device 112, the Controller Area Network (CAN) bus 115 associated with the vehicle 103, and/or a cloud computing device. According to various embodiments, each one of the tires 106 on the vehicle 103 may include one or more of the sensor units 109.

While the vehicle 103 of FIGS. 1A and 1B is depicted as a passenger car, the vehicle 103 may comprise any type of vehicle that employs tires where the passenger car is presented as an example. To this end, the vehicle 103 may comprise other vehicles falling into various categories such as commercial trucks and trailers, off-road vehicles and the like, in which such vehicles 103 include a greater or lesser number of tires 106 than are shown in FIG. 1A and 1B.

Turning now to FIGS. 2A and 2B, shown are example networked environments 200 (e.g., 200a, 200b) according to various embodiments. FIG. 2A illustrates a networked environment 200a that includes a vehicle computing environment 203. The vehicle computing environment 203 can comprises a vehicle computing device 112, a CAN bus 115, one or more vehicle electronic systems 206, and sensor units 109 which can be in data communication with each other via one or more network. The vehicle computing device 112 comprises a processor circuit that executes applications associated with the control and/or operation of the vehicle 103. For example, in FIG. 2A, the processor circuit of the vehicle computing device 112 can execute a surface condition detection service 209, and/or other applications.

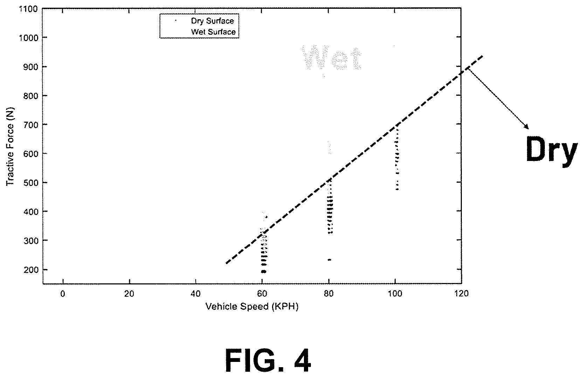

The surface condition detection service 209 can be executed to analyze vehicle data 218 collected via the CAN bus 115 of the vehicle 103 to estimate tractive forces and determine a surface condition associated with a surface being traveled on by the vehicle 103. In various examples, the vehicle data 218 can include an engine torque, an engine revolutions per minute (RPM), a vehicle speed, a wheel speed, a vehicle acceleration, and/or other types of vehicle-based data that can be obtained from the CAN bus 115 of the vehicle 103. In various examples, the tractive forces can be determined based at least in part on the engine torque, engine RPM, and vehicle speed, as will be discussed in further detail with regard to FIG. 4.

According to various examples, prior to estimating the tractive forces needed to determine a surface condition, the surface condition detection service 209 can determine if the vehicle 103 is in a steady state. In particular, the engine torque information included in the vehicle data 218 is more reliable when the vehicle is considered to be in a steady state. Furthermore, estimating the forces during a steady state and a constant speed can produce a high signal to noise ratio. In various examples, a steady state of a vehicle 103 can occur when the engine RPM is within a predefined RPM threshold value, a vehicle speed is within a predefined speed threshold value, and a vehicle acceleration is within a predefined acceleration threshold value. If all three conditions are satisfied, the surface condition detection service 209 can trigger or otherwise activate the calculation of the tractive force estimation.

In various examples, the surface condition detection service 209 estimates the tractive force is estimated by based at least in part on a total tractive force, a road grade estimation, and an aerodynamic drag force. According to various examples, the tractive force used to predict a road surface condition is the total tractive force minus the road grade estimation and the aerodynamic drag force.

In various examples, the surface condition detection service 209 can execute a surface condition detection model 230 that is trained to predict or otherwise output a probability that a surface is wet or dry. In various examples, the surface condition detection model 230 is trained to predict or otherwise output a probability associated with a surface condition based at least in part on the estimated tractive forces and a vehicle speed. In various examples, upon obtaining the output of the surface condition detection model 230, the surface condition detection service 209 can transmit the road condition probability to one or more vehicle electronic systems 206 or other applications within the vehicle computing device 112 which can be configured to adjust the operation of one or more components of the vehicle 103 based at least in part on the road condition probability.

In various examples, the vehicle computing device 112 can also comprise a receiver 212 for obtaining sensor parameter data 215 transmitted from the sensor units 109 on the tires 106 of the vehicle 103, vehicle data 218 obtained from the CAN bus 115 associated with the vehicle 103, and/or other data that is accessible over a network.

Also, various data is stored in a vehicle data store 233 that is accessible to the vehicle computing device 112. The data store 233 may be representative of a plurality of data stores 233 as can be appreciated. The data stored in the data store 233, for example, is associated with the operation of the various applications and/or functional entities associated with the vehicle 103. For example, the data store 233 can include vehicle tire data 236, vehicle data 218, a surface condition detection model 230, surface condition detection rules 239, and/or other information.

The vehicle tire data 236 can include information for each specific tire 106. For example, the vehicle tire data 236 may include a tire identifier, manufacturing information for the tire 106 (*e.g.*, manufacture name, tire model, *etc.*), tire size information (*e.g.*, rim size, width, and outer diameter, *etc.*), manufacturing location, manufacturing date, a treadcap code that includes or correlates to a compound identification, a mold code that includes or correlates to a tread structure identification, and/or other information. The vehicle tire data 236 may also include a service history or other information to identify specific features and parameters of each tire 106. The vehicle tire data 236 can further include a sensor unit ID 242, sensor parameter data 215, and/or other data.

The sensor unit ID 242 can include an alphanumeric identifier that can be used to identify the sensor unit 109 on a given tire 106. In some examples, the sensor unit ID 242 can include additional information about the sensor unit 109, including a location of the tire, which axel the tire 106 is installed on, a side of the vehicle 103 on which the tire 106 is located (*e.g.*, left, right), and/or other information. The sensor parameter data 215 can comprise data collected from a sensor unit 109 on a given tire 106. As previously discussed, the sensor unit 109 can comprise at least one of a pressure sensor, a temperature sensor, an accelerometer, a revolution counter, and/or other types of sensors. Accordingly, the sensor parameter data 215 can include temperature data, pressure data, accelerometer data, revolution data, and/or other types of data.

The vehicle data 218 can include data associated with a vehicle 103 supported by the tire 106. The vehicle data 218 can be obtained from a vehicle CAN bus 115 in communication with one or more vehicle systems 206 of a vehicle 103 supported by the tire 106. The vehicle data 218 can include an engine torque, an engine revolutions per minute (RPM), a vehicle speed, a wheel speed, a vehicle acceleration, a vehicle load, an odometer value, a brake cylinder pressure value, and/or other type of vehicle data.

The surface condition detection model 230 is a machine learning model trained to predict the probability of whether a surface is wet or dry based at least in part on the tractive forces and vehicle speed. The surface condition detection model 230 can include a decision tree classifier, a gradient boost classifier, a Gaussian naive Bayes classifier, a reinforcement learning algorithm, a logistic regression classifier, a random forest classifier, a multi-layer perceptron classifier, a recurrent neural network, a neural network, a label-specific attention network, an ensemble model, and/or any other type of trained model as can be appreciated. Although the surface condition detection model 230 is can comprise a neural network, it is noted that the computational overhead associated with the neural network can be minimized by implementing a classifier model that is not a neural network.

The surface condition detection rules 239 include rules, models, and/or configuration data for the various algorithms or approaches employed by surface condition detection service 209, and/or other application or device. For example, the surface condition detection rules 239 can include predefined threshold values (*e.g.*, RPM threshold value, speed threshold value, acceleration threshold value) associated with determining a whether a vehicle is in a steady state. In addition, the surface condition detection rules 239 can include the various models, formulas, equations, and/or algorithms for determining the tractive force. In various examples, the surface condition detection rules 239 can include rules associated with which vehicle electronic systems 206 and/or other applications are to be provided with the predicted surface condition of the road on which the vehicle 103 is traveling.

In various examples, the vehicle computing device 112 can include a communication system to facilitate communication with vehicle components of the vehicle 103 (*e.g.*, obtaining sensor parameter data 215 transmitted from the sensor units 109 on the tires 106, vehicle data 218 obtained from the Controller Area Network (CAN) bus 115 via one or more vehicle electronic systems 206 of the vehicle 203, *etc.*) a remote computing environment 221 (FIG. 2B) over a network 224 (FIG. 2B), a client device 227 (FIG. 2B), or other type of computing device. In this respect, the vehicle computing device 112 may include appropriate communications capabilities to link to a cellular network, Wi-Fi network, BLUETOOTH° network, microwave transmission network, radio broadcast networks, or other communication networks.

Although illustrated in FIG. 2A as being separate from the vehicle electronic systems 206, in some examples, the vehicle computing device 112 may be integrated with other vehicle electronic systems 206 in the vehicle 103. In various examples, the vehicle computing device 112 can be coupled to the CAN bus 115 and may communicate with other vehicle electronic systems 206 included on the CAN bus 115.

In various examples, the vehicle electronic systems 206 can include electronic components of a vehicle 103 that are responsible for managing and regulating various operations of the vehicle 103. For example, the vehicle electronic system 206 can include an engine control system, a transmission control system, a brake system, a suspension system, a steering system, and/or other type of system of vehicle. The vehicle electronic systems 206 can coupled to a CAN bus 115 to allow communication among the different vehicle electronic systems 206 as can be appreciated. In various examples, a vehicle electronic system 206 can comprise a processor circuit for executing applications to adjust the operational aspects associated with the particular vehicle electronic system 206.

With reference to FIG. 2B, shown is an alternative network environment 200b according to various embodiments. FIG. 2B differs from FIG. 2A in that the functionality associated with predicting the road surface condition occurs in the remote computing environment 221 instead of the vehicle computing environment 203. In particular, the vehicle computing environment 203 can transmit the vehicle data 218 in real time to the remote computing environment 221. Additionally, the surface condition detection service 209 of the remote computing environment 221 can transmit the predicted road surface condition to the vehicle computing environment 203 and/or one or more vehicle electronic systems 206 of the vehicle. The network environment 200b of FIG. 2B can include a remote computing environment 221, the vehicle computing environment 203, and a client device 227, which can be in data communication with each other via a network 224.

The network 224 can include wide area networks (WANs), local area networks (LANs), personal area networks (PANs), or a combination thereof. These networks can include wired or wireless components or a combination thereof. Wired networks can include Ethernet networks, cable networks, fiber optic networks, and telephone networks such as dial-up, digital subscriber line (DSL), and integrated services digital network (ISDN) networks. Wireless networks can include cellular networks, satellite networks, Institute of Electrical and Electronic Engineers (IEEE) 802.11 wireless networks (i.e., WI-FI®), BLUETOOTH° networks, microwave transmission networks, as well as other networks relying on radio broadcasts. The network 224 can also include a combination of two or more networks 224. Examples of networks 224 can include the Internet, intranets, extranets, virtual private networks (VPNs), and similar networks.

The remote computing environment 221 can include one or more computing devices that include a processor, a memory, and/or a network interface. For example, the computing devices can be configured to perform computations on behalf of other computing devices or applications. As another example, such computing devices can host and/or provide content to other computing devices in response to requests for content.

Moreover, the remote computing environment 221 can employ a plurality of computing devices that can be arranged in one or more server banks or computer banks or other arrangements. Such computing devices can be located in a single installation or can be distributed among many different geographical locations. For example, the remote computing environment 221 can include a plurality of computing devices that together can include a hosted computing resource, a grid computing resource or any other distributed computing arrangement. In some cases, the remote computing environment 221 can correspond to an elastic computing resource where the allotted capacity of processing, network, storage, or other computing-related resources can vary over time.

Various applications or other functionality can be executed in the remote computing environment 221. The components executed on the remote computing environment 221 include a vehicle management system 245, a surface condition detection service 209, and other applications, services, processes, systems, engines, or functionality not discussed in detail herein.

The vehicle management system 245 can be executed to track the location and status of vehicles 103. Such a vehicle management system 245 may track hundreds if not thousands of vehicle 103. The vehicle management system 245 indicates to operators when a vehicle 103 may need to be serviced, replaced, and/or other information.

Also, various data is stored in a remote data store 248 that is accessible to the remote computing environment 221. The remote data store 248 can be representative of a plurality of remote data store 248, which can include relational databases or non-relational databases such as object-oriented databases, hierarchical databases, hash tables or similar key-value data stores, as well as other data storage applications or data structures. Moreover, combinations of these databases, data storage applications, and/or data structures may be used together to provide a single, logical, data store. The data stored in the remote data store 221 is associated with the operation of the various applications or functional entities described below. This data can include the vehicle tire data 236, vehicle data 218, surface condition detection model 230, surface condition detection rules 238, and potentially other data.

The client device 227 is representative of a plurality of client devices that can be coupled to the network 224. The client device 227 can include a processor-based system such as a computer system. Such a computer system can be embodied in the form of a personal computer (*e.g.*, a desktop computer, a laptop computer, or similar device), a mobile computing device (*e.g.*, personal digital assistants, cellular telephones, smartphones, web pads, tablet computer systems, music players, portable game consoles, electronic book readers, and similar devices), media playback devices (*e.g.*, media streaming devices, BluRay® players, digital video disc (DVD) players, set-top boxes, and similar devices), a videogame console, or other devices with like capability. The client device 227 can include one or more displays 251, such as liquid crystal displays (LCDs), gas plasma-based flat panel displays, organic light emitting diode (OLED) displays, electrophoretic ink ("E-ink") displays, projectors, or other types of display devices. In some instances, the display 251 can be a component of the client device 227 or can be connected to the client device 227 through a wired or wireless connection.

The client device 227 can be configured to execute various applications such as a client application 254 or other applications. The client application 254 can be executed in a client device 227 to access network content served up by the remote computing environment 221, the vehicle computing environment 203, or other servers, thereby rendering a user interface 257 on the display 251. To this end, the client application 254 can include a browser, a dedicated application, or other executable, and the user interface 257 can include a network page, an application screen, or other user mechanism for obtaining user input. The client device 227 can be configured to execute applications beyond the client application 254 such as email applications, social networking applications, word processors, spreadsheets, or other applications.

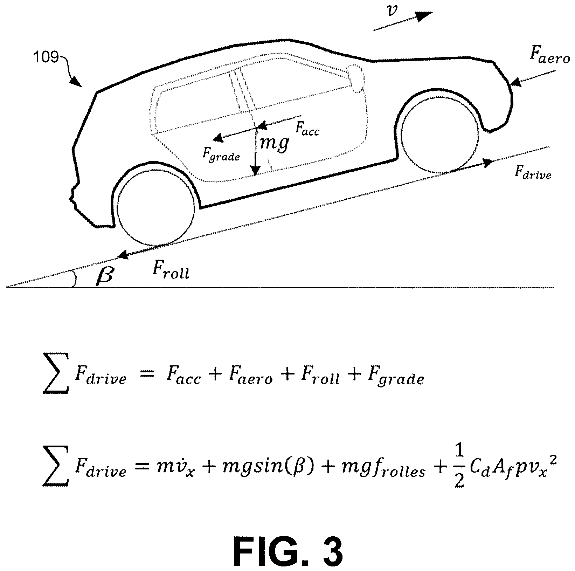

Next, a general description of the operation of the various components of the network environment 200 is provided with regard to FIGS. 3-5. To begin, FIG. 3 illustrates the known longitudinal vehicle dynamics associated with a vehicle 103. In particular, FIG. 3 illustrates the different forces associated with a vehicle 103 traveling along a surface and the corresponding equations for determining the tractive force based at least in part on the values of the different forces. The forces illustrated in FIG. 3 include the aerodynamic force ($F_{aero}$), the acceleration force($F_{acc}$), the drive force($F_{drive}$), the gradient force($F_{grade}$), the rolling force($F_{roll}$), and the load force ($mg$). As illustrated in FIG. 3, the tractive force corresponds to the sum of the force for overcoming the acceleration resistance of the car, the force for overcoming the grade, the force for overcoming the rolling resistance and the force associated with the aerodynamic drag. In various examples, the standard dynamics for calculating tractive force can be calculated.

With regard to the prediction of the road surface condition, the surface condition detection model 230 is trained to account for the effect of water on the tire rolling resistance with respect to the estimated tractive force and vehicle speed. For example, when a tire rolls over a wet road, the tire must displace the water before making direct contact with the road surface, thereby resulting in additional rolling resistance forces. Similarly, water can affect the contact temperature of the tires 106, thereby affecting the rolling resistance (*e.g.*, lower temperature yields a higher rolling resistance).

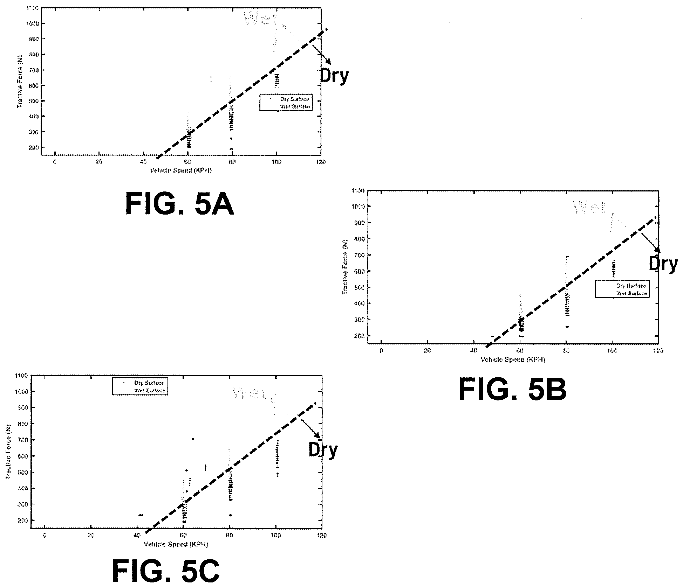

Moving on to FIG. 4, shown is an example graphical representation illustrating the relationship between tire tractive forces (under stead state cruising conditions) versus vehicle speed on dry and wet surfaces. In particular, FIG. 4 illustrates that a wet road surface yields higher resistive forces. In additional testing, as illustrated in FIGS. 5A-5C, the same behavior (*e.g.*, a wet road surface yields higher resistive forces) is observed in all tested tire constructions. For example, FIG. 5A represents a graphical representation of the relationship between tire tractive forces versus vehicle speed on dry and wet surfaces for a winter type tire. FIG. 5B represents a graphical representation of the relationship between tire tractive forces versus vehicle speed on dry and wet surfaces for an all season type tire. FIG. 5C represents a graphical representation of the relationship between tire tractive forces versus vehicle speed on dry and wet surfaces for a summer type tire.

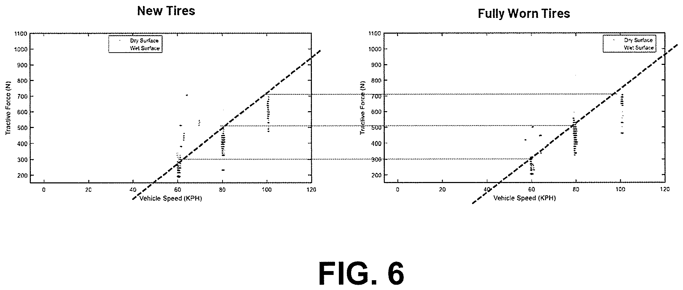

Referring next to FIG. 6, shown are example graphical representations illustrating the relationship between tire tractive forces (under stead state cruising conditions) versus vehicle speed on dry and wet surfaces for both new tires and fully worn tires. As illustrated in FIG. 6, the classification boundary between dry and wet conditions remains unchanged for new and worn tires.

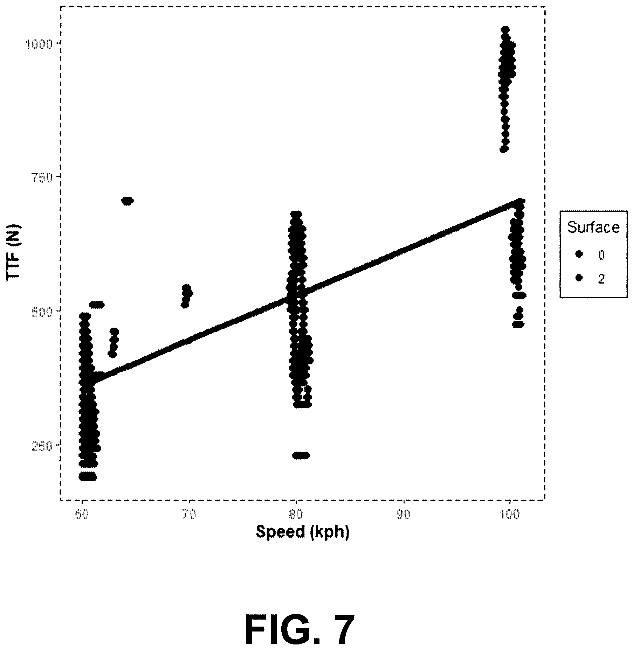

Moving on to FIG. 7, shown is an example graphical representation corresponding to training of the surface condition detection model 230. In particular, the surface condition detection model 230 comprises a machine learning model trained according to the relationship between tire tractive forces (under stead state cruising conditions) versus vehicle speed on dry and wet surfaces associated with the graphical representation of FIG. 7. In the non-limiting example of FIG. 7, the surface condition detection model 230 can be trained as a classification model using the following non-limiting example parameters:

    coef.lm_icept = 4.550804
    coef.lm_slope1 = -0.266266
    coef.lm_slope2 = 0.03163149

$$X = coef.lm\_icept*1 + coef.lm\_slope1*x1 + coef.lm\_slope2*x2$$

The output of the model (*e.g.*, sigmoid(x)) can correspond to the probability that a road surface is wet.

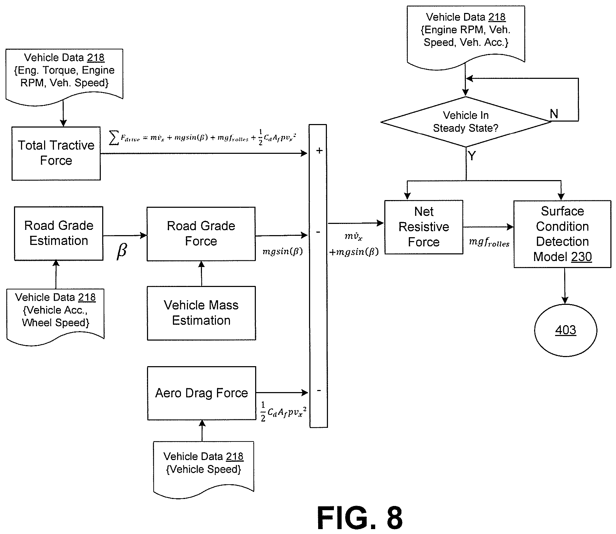

Referring next to FIG. 8, shown is an example schematic diagram illustrating some of the functionality of the surface condition detection service 209. According to various embodiment of the present disclosure, the total tractive force can be calculated using the vehicle data 218 obtained from the vehicle 103. For example, the total tractive force can be estimated using the engine torque, engine RPM, and vehicle speed information included in the vehicle data 218. In various examples, the total tractive force can be calculated as follows:

$$Total\ tractive\ force = \frac{Driveline\ torque}{tire\ rolling\ radius} = \frac{Engine\ torque\ (Nm)\ *\ GearRatio\ *\ FinalDriveRatio\ *\ powertrain\ efficiency}{tire\ rolling\ radius\ (m)}$$

The total drivetrain ratio = *Gear Ratio * Final Drive Ratio,* the *Gear Ratio* corresponds to the gear ration of the engaged gear, and the *Final Drive Ratio* corresponds to the final drive ration at the differential. Therefore, the following applies:

$$GearRatio\ X\ FinalDriveRatio = 0.1047 * \frac{Engine\ speed\ (RPM)\ X\ tire\ rolling\ radius(m)}{Vehicle\ speed\ (\frac{m}{s})}$$

Accordingly, the tire tractive force can be calculated as follows using the vehicle data 218:

$$Tire\ tractive\ force = \frac{0.1047 * Engine\ torque\ (Nm)\ *\ Engine\ speed\ (RPM)\ *\ powertrain\ efficiency}{Vehicle\ speed\ (\frac{m}{s})}$$

In various examples, the surface condition detection model 230 is trained with data assuming a zero road grade force and a zero aerodynamic drag force. Accordingly, the road grade force can be estimated and the aerodynamic drag force can be estimated so that road grade force and the aerodynamic drag force can be deducted from the calculated total tractive force. The road grade resistance force can be estimated based at least in part on an estimation of the road grade and the vehicle mass estimation. In various examples, the road grade can be estimated using the vehicle acceleration and the wheel speed that can be included in the vehicle data 218. In some examples, the wheel speed and/or the vehicle acceleration can be included in the sensor parameter data 215 obtained from a sensor unit 109 of a tire 106. Similarly, the aerodynamic drag force can be estimated based at least in part on the vehicle speed included in the vehicle data 218. The net resistive force (*e.g.*, tractive force) corresponds to the total tractive force minus the estimated road grade force and the aerodynamic drag force. The net resistive force corresponding to the tractive force can be applied as an input of the surface condition detection model 230 along with the vehicle speed from the vehicle data 218.

However, as previously discussed, prior to estimating the tractive force (*e.g.*, net resistive force) needed to determine a surface condition, the surface condition detection service 209 determines if the vehicle 103 is in a steady state. In particular, the engine torque information included in the vehicle data 218 is more reliable when the vehicle is considered to be in a steady state. In various examples, a steady state of a vehicle 103 can occur when the engine RPM is within a predefined RPM threshold value, a vehicle speed is within a predefined speed threshold value, and a vehicle acceleration is within a predefined acceleration threshold value. If all three conditions are satisfied, the surface condition detection service 209 can trigger or otherwise activate the calculation of the tractive force estimation discussed above.

Upon estimating the tractive force using the vehicle data 218, the surface condition detection service 209 can apply the estimated tractive force and the vehicle speed as inputs to the surface condition detection model 230. The surface condition detection model 230 can be trained and optimized to output a road surface probability 403 that can be used to indicate whether the road surface is dry or wet. In various examples, the probability 403 can be determined as follows:

$$\rho = \frac{1}{1 + e^{-\theta T_x}}$$

where $x_1 = 1$ (*e.g.*, an intercept term), $x_1$ = *vehicle speed (kph)*, and $x_1$ = *tractive force (N)*.

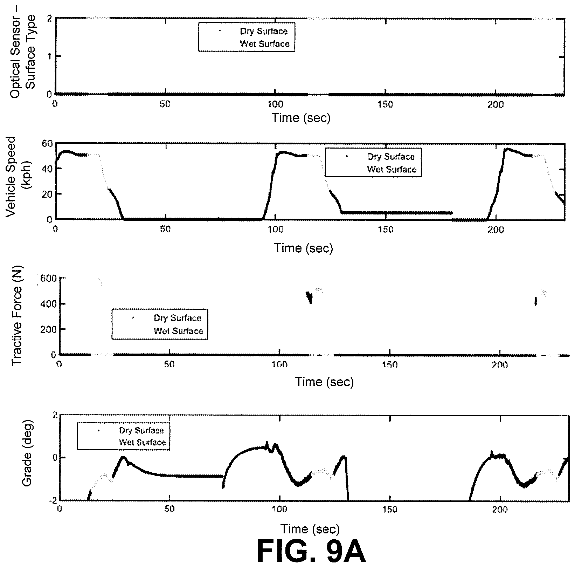

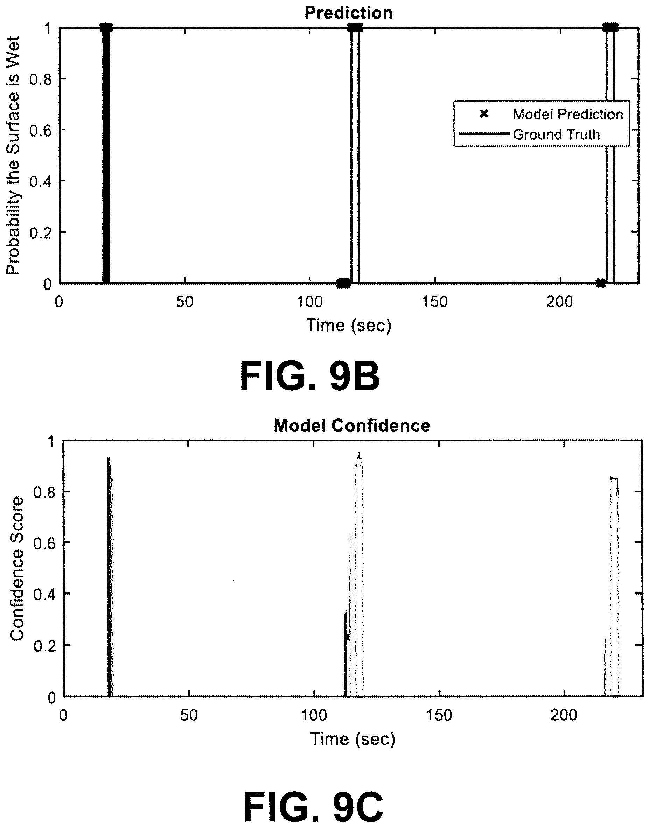

Moving on to FIGS. 9A, 9B, and 9C, shown are example graphical representations associated with the real-time testing of the surface condition detection model 230. In particular, 9A illustrates graphical representations associated with various data parameters that can be applied as inputs to the surface condition detection model 230. For example, the data parameters can include optical sensor surface type, vehicle speed, tractive force, road grade, and/or other features. FIG. 9B illustrates a graphical representation associated with the prediction of the surface condition detection model 230 versus the ground truth. As illustrated in FIG. 9B, the dots indicate when the estimator is activated and a prediction is made. The graphical representation illustrates a near perfect classification accuracy of about 99%. FIG. 9C illustrates a graphical representation of the model confidence for the surface condition detection model 230.

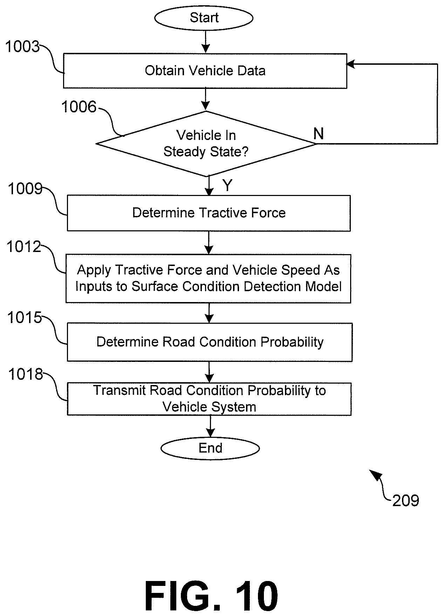

Referring next to FIG. 10, shown is a flowchart that provides one example of the operation of a portion of the surface condition detection model 230. The flowchart of FIG. 10 provides merely an example of the many different types of functional arrangements that can be employed to implement the operation of the depicted portion of the surface condition detection model 230. As an alternative, the flowchart of FIG. 10 can be viewed as depicting an example of elements of a method implemented within the network environment 200a, 200b.

Beginning with block 1003, the surface condition detection model 230 obtains the vehicle data 218. In various examples, the surface condition detection model 230 can be in communication with the CAN bus 115 and receive the vehicle data 218 from the CAN bus 115. In other examples, the vehicle data 218 from the CAN bus 115 can be stored in the vehicle data store 233 and/or transmitted and stored in the remote data store 248 and the surface condition detection model 230 can obtain the vehicle data 218 from the vehicle data store 233 and/or the remote data store 248. In various examples, the vehicle data 218 is obtained in real-time.

At block 1006, the surface condition detection model 230 determines if the vehicle 103 is in a steady state. In various examples, a steady state of a vehicle 103 can occur when the engine RPM is within a predefined RPM threshold value, a vehicle speed is within a predefined speed threshold value, and a vehicle acceleration is within a predefined acceleration threshold value. In various examples, the threshold values can be included in the surface condition detection rules 239. The surface condition detection model 230 can compare the values of the engine RPM, the vehicle speed, and the vehicle acceleration with the corresponding threshold values to determine if all three conditions are satisfied. In some examples, the values of the engine RPM, the vehicle speed, and the vehicle acceleration correspond to windowed standard deviation values over a range of time. If all three conditions are satisfied, the surface condition detection service 209 can trigger or otherwise activate the calculation of the tractive force estimation and proceed to block 1009. Otherwise, the surface condition detection service 209 returns to block 1003.

At block 1009, the surface condition detection service 209 determines the tractive force based at least in part on the vehicle data 218. In various examples, the tractive force is estimated by first estimating the total tractive force using the engine torque, engine RPM, and vehicle speed information included in the vehicle data 218. In various examples, the surface condition detection model 230 is trained with data assuming a zero road grade force and zero acceleration. Accordingly, the road grade force can be estimated and the aerodynamic drag force can be estimated so that road grade force and the aerodynamic drag force can be deducted from the calculated total tractive force. The road grade force can be estimated based at least in part on an estimation of the road grade and the vehicle mass estimation. In various examples, the road grade can be estimated using the vehicle acceleration and the wheel speed that can be included in the vehicle data 218. In some examples, the wheel speed and/or the vehicle acceleration can be included in the sensor parameter data 215 obtained from a sensor unit 109 of a tire 106. Similarly, the aerodynamic drag force can be estimated based at least in part on the vehicle speed included in the vehicle data 218. In various examples, the surface condition detection service 209 can estimate the net resistive force (*e.g.*, the tractive force) based at least in part on subtracting the estimated road grad force value and the aerodynamic drag force value from the total tractive force value.

At block 1012, the surface condition detection service 209 applies the tractive force and the vehicle speed as inputs to the surface condition detection model 230. The surface condition detection model 230 is a machine learning model trained to predict the probability of whether a surface is wet or dry based at least in part on the tractive forces and vehicle speed. The surface condition detection model 230 is trained to account for the effect of water on the tire rolling resistance with respect to the estimated tractive force and vehicle speed.

At block 1015, the surface condition detection service 209 determines the road condition probability 403. The road condition probability 403 represents a probability of whether a surface is wet or dry. The road condition probability 403 corresponds to an output of the surface condition detection model 230.

At block 1018, the surface condition detection service 209 transmits the road condition probability 403 to a vehicle system 206. In various examples, the vehicle electronic system 206 can adjust the operational aspects associated with the particular vehicle electronic system 206 based at least in part on the road condition probability 403. Thereafter, this portion of the process proceeds to completion.

A number of software components previously discussed are stored in the memory of the respective computing devices and are executable by the processor of the respective computing devices. In this respect, the term "executable" means a program file that is in a form that can ultimately be run by the processor. Examples of executable programs can be a compiled program that can be translated into machine code in a format that can be loaded into a random-access portion of the memory and run by the processor, source code that can be expressed in proper format such as object code that is capable of being loaded into a random-access portion of the memory and executed by the processor, or source code that can be interpreted by another executable program to generate instructions in a random-access portion of the memory to be executed by the processor. An executable program can be stored in any portion or component of the memory, including random-access memory (RAM), read-only memory (ROM), hard drive, solid-state drive, Universal Serial Bus (USB) flash drive, memory card, optical disc such as compact disc (CD) or digital versatile disc (DVD), floppy disk, magnetic tape, or other memory components.

The memory includes both volatile and nonvolatile memory and data storage components. Volatile components are those that do not retain data values upon loss of power. Nonvolatile components are those that retain data upon a loss of power. Thus, the memory can include random-access memory (RAM), read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive, or other memory components, or a combination of any two or more of these memory components. In addition, the RAM can include static random-access memory (SRAM), dynamic random-access memory (DRAM), or magnetic random-access memory (MRAM) and other such devices. The ROM can include a programmable read-only memory (PROM), an erasable programmable read-only memory (EPROM), an electrically erasable programmable read-only memory (EEPROM), or other like memory device.

Although the applications and systems described herein can be embodied in software or code executed by general purpose hardware as discussed above, as an alternative the same can also be embodied in dedicated hardware or a combination of software/general purpose hardware and dedicated hardware. If embodied in dedicated hardware, each can be implemented as a circuit or state machine that employs any one of or a combination of a number of technologies. These technologies can include, but are not limited to, discrete logic circuits having logic gates for implementing various logic functions upon an application of one or more data signals, application specific integrated circuits (ASICs) having appropriate logic gates, field-programmable gate arrays (FPGAs), or other components, *etc.* Such technologies are generally well known by those skilled in the art and, consequently, are not described in detail herein.

The flowchart shows the functionality and operation of an implementation of portions of the various embodiments of the present disclosure. If embodied in software, each block can represent a module, segment, or portion of code that includes program instructions to implement the specified logical function(s). The program instructions can be embodied in the form of source code that includes human-readable statements written in a programming language or machine code that includes numerical instructions recognizable by a suitable execution system such as a processor in a computer system. The machine code can be converted from the source code through various processes. For example, the machine code can be generated from the source code with a compiler prior to execution of the corresponding application. As another example, the machine code can be generated from the source code concurrently with execution with an interpreter. Other approaches can also be used. If embodied in hardware, each block can represent a circuit or a number of interconnected circuits to implement the specified logical function or functions.

Although the flowchart shows a specific order of execution, it is understood that the order of execution can differ from that which is depicted. For example, the order of execution of two or more blocks can be scrambled relative to the order shown. Also, two or more blocks shown in succession can be executed concurrently or with partial concurrence. Further, in some embodiments, one or more of the blocks shown in the flowchart can be skipped or omitted. In addition, any number of counters, state variables, warning semaphores, or messages might be added to the logical flow described herein, for purposes of enhanced utility, accounting, performance measurement, or providing troubleshooting aids, *etc.* It is understood that all such variations are within the scope of the present disclosure.

Also, any logic or application described herein that includes software or code can be embodied in any non-transitory computer-readable medium for use by or in connection with an instruction execution system such as a processor in a computer system or other system. In this sense, the logic can include statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system. Moreover, a collection of distributed computer-readable media located across a plurality of computing devices (*e.g.*, storage area networks or distributed or clustered filesystems or databases) may also be collectively considered as a single non-transitory computer-readable medium.

The computer-readable medium can include any one of many physical media such as magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium can be a random-access memory (RAM) including static random-access memory (SRAM) and dynamic random-access memory (DRAM), or magnetic random-access memory (MRAM). In addition, the computer-readable medium can be a read-only memory (ROM), a programmable read-only memory (PROM), an erasable programmable read-only memory (EPROM), an electrically erasable programmable read-only memory (EEPROM), or other type of memory device.

Further, any logic or application described herein can be implemented and structured in a variety of ways. For example, one or more applications described can be implemented as modules or components of a single application. Further, one or more applications described herein can be executed in shared or separate computing devices or a combination thereof. For example, a plurality of the applications described herein can execute in the same computing device, or in multiple computing devices in the same computing environment 203, 221.

**Claims**

1. A method for determining a road surface condition, the method comprising:

   obtaining, by at least one computing device, vehicle data collected from a vehicle controller area network (CAN) bus in communication with one or more vehicle systems of a vehicle traveling along a surface;
   determining, by the at least one computing device, that the vehicle is operating in a steady state based at least in part on the vehicle data; and
   in response to determining that the vehicle is operating in the steady state:

      estimating, by the at least one computing device, a tractive force associated with at least one tire of the vehicle and the surface based at least in part on the vehicle data;
      applying, by the at least one computing device, the tractive force and a vehicle speed of the vehicle to a surface condition detection model; and
      determining, by the at least one computing device, a probability that the surface is wet or dry based at least in part on an output of the surface condition detection model.

2. The method of claim 1, wherein the vehicle data comprises an engine torque, an engine revolutions per minute (RPM), the vehicle speed, a wheel speed and a vehicle acceleration, and, optionally, wherein determining that the vehicle is operating in the steady state further comprises: determining that the engine RPM exceeds an RPM threshold; determining that the vehicle speed exceeds a speed threshold; and determining that the vehicle acceleration exceeds an acceleration threshold.

3. The method of claim 1 or 2, wherein the surface condition detection model comprises a trained classifier.

4. The method of at least one of the previous claims, further comprising:

   determining a total tractive force;
   determining a road grade force; and
   determining an aerodynamic drag force;
   wherein the tractive force or the net resistive force is estimated by subtracting the road grade force and the aerodynamic drag force from the total tractive force.

5. The method of at least one of the previous claims, further comprising transmitting the probability to at least one vehicle system of the one or more vehicle systems, the at least one vehicle system being configured to adjust an operation of the vehicle based at least in part on the probability.

6. The method of at least one of the previous claims, wherein the at least one computing system is located within the vehicle or is located remote from the vehicle.

7. A road surface detection system, the system comprising:

   a computing device comprising a processor and a memory; and
   machine-readable instructions stored in the memory that, when executed by the processor, cause the computing device to at least:

obtain vehicle data collected from a vehicle controller area network (CAN) bus in communication with one or more vehicle systems of a vehicle traveling along a surface;
determine that the vehicle is operating in a steady state based at least in part on the vehicle data; and
in response to determining that the vehicle is operating in the steady state:

estimate a tractive force associated with at least one tire of the vehicle and the surface based at least in part on the vehicle data;
apply the tractive force and a vehicle speed of the vehicle to a surface condition detection model; and
determine a probability that the surface is wet or dry based at least in part on an output of the surface condition detection model.

8. The system of claim 7, wherein the vehicle data comprises an engine torque, an engine revolutions per minute (RPM), the vehicle speed, a wheel speed and a vehicle acceleration; and/or wherein the surface condition detection model comprises a trained classifier.

9. The system of claim 7 or 8, wherein the machine-readable instructions further cause the computing device to at least:

determine a total tractive force;
determine a road grade force; and
determine an aerodynamic drag force;
wherein the tractive force is estimated by subtracting the road grade force and the aerodynamic drag force from the total tractive force.

10. The system of at least one of the previous claims, wherein the machine-readable instructions further cause the computing device to at least transmit the probability to at least one vehicle system of the one or more vehicle system, the at least one vehicle system being configured to adjust an operation of the vehicle based at least in part on the probability.

11. The system of at least one of the previous claims, wherein the at least one computing system is located within the vehicle or is located remote from the vehicle.

12. A non-transitory, computer-readable medium, comprising machine-readable instructions that, when executed by a processor of a computing device, cause the computing device to at least:

obtain vehicle data collected from a vehicle controller area network (CAN) bus in communication with one or more vehicle systems of a vehicle traveling along a surface;
determine that the vehicle is operating in a steady state based at least in part on the vehicle data; and
in response to determining that the vehicle is operating in the steady state:

estimate a tractive force associated with at least one tire of the vehicle and the surface based at least in part on the vehicle data;
apply the tractive force and a vehicle speed of the vehicle to a surface condition detection model; and
determine a probability that the surface is wet or dry based at least in part on an output of the surface condition detection model.

13. The non-transitory, computer-readable medium of claim 12, wherein the surface condition detection model comprises a trained classifier.

14. The non-transitory, computer-readable medium of claim 12 or 13, wherein the machine-readable instructions, when executed by the processor, further cause the computing device to at least: transmit the probability to at least one vehicle system of the one or more vehicle system, the at least one vehicle system being configured to adjust an operation of the vehicle based at least in part on the probability.

15. The non-transitory, computer-readable medium of at least one of the claims 12 to 14, wherein the machine-readable instructions, when executed by the processor, further cause the computing device to at least:

determine a total tractive force;
determine a road grade force; and

determine an aerodynamic drag force;
wherein the tractive force is estimated by subtracting the road grade force and the aerodynamic drag force from the total tractive force.

FIG. 1A

FIG. 1B

Vehicle Computing Environment 203

Vehicle Computing Device 112

Vehicle Data Store 233

Vehicle Tire Data 236

Sensor Unit ID 242

Sensor Parameter Data 215

Vehicle Data 218

Surface Condition Detection Model 230

Surface Condition Detection Rules 239

Surface Condition Detection Service 209

Receiver 212

Vehicle Electronic System(s) 206

CAN Bus 115

Sensor Unit(s) 109

103

# FIG. 2A

200a

Remote Computing Environment 221

Remote Data Store 248

Vehicle Tire Data 236

Sensor Unit ID 242

Sensor Parameter Data 215

Vehicle Data 218

Surface Condition Detection Model 230

Surface Condition Detection Rules 239

Vehicle Management System 245

Surface Condition Detection Service 209

Client Device(s) 227

Client Application 254

Display 251

User Interface 257

Network 224

Vehicle Computing Environment 203

Vehicle Computing Device 112

Vehicle Data Store 233

Vehicle Tire Data 236

Sensor Unit ID 242

Sensor Parameter Data 215

Vehicle Data 218

Receiver 212

Vehicle Electronic System(s) 206

CAN Bus 115

Sensor Unit(s) 109

# FIG. 2B

200b

$$\sum F_{drive} = F_{acc} + F_{aero} + F_{roll} + F_{grade}$$

$$\sum F_{drive} = m\dot{v}_x + mg\,sin(\beta) + mgf_{rolles} + \frac{1}{2}C_d A_f p v_x^2$$

# FIG. 3

**FIG. 4**

**FIG. 5A**

**FIG. 5B**

**FIG. 5C**

New Tires        Fully Worn Tires

# FIG. 6

# FIG. 7

FIG. 8

FIG. 9A

**FIG. 9B**

**FIG. 9C**

```
                              ┌─────────────┐
                              │    Start    │
                              └──────┬──────┘
                                     │
                                     ▼
 1003 ┐         ┌───────────────────────────────────────────┐ ◄──────┐
      └─────────│            Obtain Vehicle Data             │        │
                └───────────────────┬───────────────────────┘        │
                                    │                                 │
 1006 ┐                             ▼                                 │
      └───────────────         ╱─────────────╲         N              │
                              ╱  Vehicle In    ╲──────────────────────┘
                              ╲  Steady State? ╱
                               ╲─────────────╱
                                     │ Y
 1009 ┐         ┌────────────────────┼──────────────────────┐
      └─────────│          Determine Tractive Force          │
                └───────────────────┬───────────────────────┘
                                    │
 1012 ┐         ┌───────────────────▼───────────────────────┐
      └─────────│ Apply Tractive Force and Vehicle Speed As  │
                │ Inputs to Surface Condition Detection Model│
                └───────────────────┬───────────────────────┘
                                    │
 1015 ┐         ┌───────────────────▼───────────────────────┐
      └─────────│      Determine Road Condition Probability   │
                └───────────────────┬───────────────────────┘
                                    │
 1018 ┐         ┌───────────────────▼───────────────────────┐
      └─────────│ Transmit Road Condition Probability to     │
                │             Vehicle System                 │
                └───────────────────┬───────────────────────┘
                                    │
                                    ▼
                              ┌─────────────┐
                              │     End     │
                              └─────────────┘

                                                        ◄─ 209
```

# FIG. 10